# FASCICULE DE BREVET EUROPEEN

(11) **EP 1 340 148 B1**
(45) Date de publication et mention de la délivrance du brevet: **23.03.2005**
(21) Numéro de dépôt: 01982539.7
(22) Date de dépôt: 24.10.2001
(51) Int. Cl.: G06F 11/10

(54) **DISPOSITIF ET PROCEDE DE DETECTION ET CORRECTION D'ERREURS MEMOIRE DANS UN SYSTEME ELECTRONIQUE**
VORRICHTUNG UND VERFAHREN ZUR ERKENNUNG UND KORREKTUR VON SPEICHERFEHLERN IN EINER ELEKTRONISCHEN VORRICHTUNG
DEVICE AND METHOD FOR DETECTING AND CORRECTING MEMORY ERRORS IN AN ELECTRONIC SYSTEM

(30) Priorité: 25.10.2000 FR 0013679
(43) Date de publication de la demande: 03.09.2003
(73) Titulaire: CENTRE NATIONAL D'ETUDES SPATIALES, 75001 Paris (FR)
(72) Inventeur: PIGNOL, Michel, F-31000 TOULOUSE (FR)
(74) Mandataire: Poulin, Gérard
(86) Numéro de dépôt international: PCT/FR2001/003300
(87) Numéro de publication internationale: WO 2002/035354

(56) Documents cités:
- US-A- 4 604 750
- US-A- 5 630 055
- "MEMORY ACCESS WITH ERROR RECOVERY" IBM TECHNICAL DISCLOSURE BULLETIN,IBM CORP. NEW YORK,US, vol. 30, no. 10, 1 mars 1988 (1988-03-01), pages 133-135, XP000715630 ISSN: 0018-8689

## Description

### Domaine technique

La présente invention concerne un dispositif et un procédé de détection et correction d'erreurs mémoire dans un système électronique.

### Etat de la technique antérieure

Les circuits électroniques intégrés à bord des véhicules spatiaux peuvent être sensibles à certaines particules générées par le soleil ou à certaines particules existant dans l'espace interstellaire. Ces particules, en traversant ces circuits, y déposent des charges électriques qui peuvent faire changer un bit d'état. De tels événements sont appelés "single event upset" (ou "événements singuliers") ou "soft-error" ; Ils sont transitoires et ne dégradent en rien le composant électronique : une cellule mémoire victime d'un événement singulier subit une erreur de lecture, mais peut être réécrite normalement par la suite.

Plusieurs effets tels que :
- la réduction de la lithographie des technologies des circuits intégrés (0,25 µm aujourd'hui et 0,18 µm prochainement),
- la baisse des tensions d'alimentation (2,2 V aujourd'hui),
peuvent avoir pour conséquence que de telles erreurs se produisent également dans les circuits intégrés utilisés au sol.

En effet, l'énergie par cellule élémentaire diminuant régulièrement (cellules mémoire, registres, etc.), celles-ci peuvent donc être perturbées par des énergies parasites faibles qui étaient sans incidence sur les circuits intégrés de précédentes générations.

L'informatique industrielle se trouve donc confrontée à des phénomènes d'erreurs transitoires engendrées :
- soit par des neutrons d'origine solaire non filtrés par l'atmosphère,
- soit par des particules alpha provenant de la désintégration d'isotopes radioactifs contenus dans les matériaux des boîtiers d'encapsulation des circuits intégrés.

L'élément le plus critique vis-à-vis de ce problème est la logique combinatoire : les erreurs mémoire peuvent être détectées via des codages (parité ou Hamming par exemple) mais, en ce qui concerne la logique combinatoire, il est impossible de détecter un événement singulier aléatoire sur un noeud quelconque à l'intérieur d'un circuit.

Le problème des événements singuliers devient donc prépondérant pour les fabricants de composants et de systèmes électroniques. Ceux-ci sont donc amenés à intégrer soit dans les circuits intégrés, soit dans les architectures, des mécanismes de protection contre les erreurs dues à ces événements. Une solution envisageable consiste à concevoir des circuits tolérants aux événements singuliers.

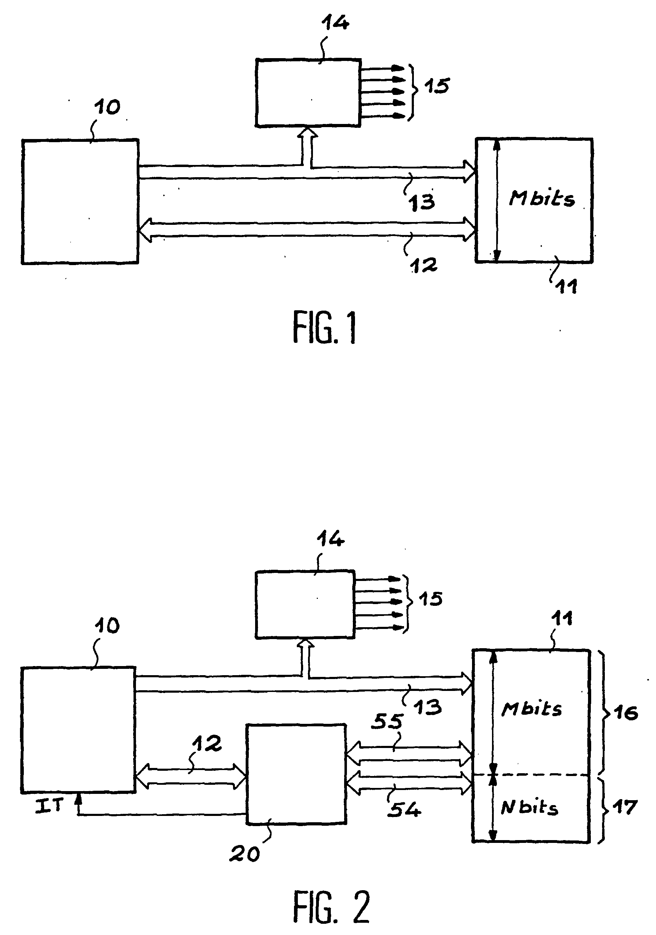

Comme illustré sur la figure 1, un système électronique peut être constitué d'un microprocesseur 10 et sa mémoire 11 reliés par un bus de données 12 et un bus Adresses+Contrôle 13. Un module de décodage 14 permet d'effectuer la sélection 15 des boîtiers mémoire.

La mémoire 11 peut être protégée par un composant couramment noté EDAC ("Error Detection And Correction") , voire EDC, ECC ou EDCC ("Error Detection/Correction Code"), qui permet de détecter puis de corriger des erreurs engendrées par les événements singuliers dans les cellules de mémorisation, comme décrit dans les documents référencés [1] à [5] en fin de description.

Comme illustré sur la figure 2, l'EDAC 20, ou composant de détection et correction d'erreurs mémoire, dans une architecture série, est un composant connecté au bus de données 12, par exemple de M bits de large, mais pas au bus d'adresses 13. L'EDAC 20 est relié à la mémoire 11 par un bus 55 de M bits de large sur lequel transitent les données stockées dans la partie 16 de la mémoire 11, et par un bus 54 de N bits de large sur lequel transitent les codes stockés dans la partie 17 de la mémoire 11 (à toute donnée est associé un code).

Lors d'une écriture en mémoire 11 par le microprocesseur 10, l'EDAC 20 ajoute aux M bits de la donnée un code de N bits de largeur. La largeur de la mémoire 11 est donc de M+N bits afin de conserver le code associé à chacune des données mémorisées.

Lors d'une lecture en mémoire 11 par le microprocesseur 10, l'EDAC 20 reçoit M+N bits.. Il calcule le code correspondant à la donnée de M bits (zone données 16) et le compare au code de N bits (zone codes 17) qui est stocké en mémoire avec la donnée. Si les deux codes ne sont pas identiques, une erreur est alors décrétée. Dans ce cas, et dans l'hypothèse de l'utilisation d'un code de Hamming qui permet de corriger un bit, l'EDAC 20 inverse le bit fautif pour le corriger, présente le mot corrigé sur son bus, et génère une interruption IT au microprocesseur pour que celui-ci réécrive la donnée correcte en mémoire. L'EDAC 20 n'ayant pas connaissance de l'adresse de la donnée, il ne peut effectuer lui-même la correction en mémoire 11.

Le code de parité (N=1) ne permettant que de détecter mais pas de corriger une erreur, on utilise généralement un code de Hamming qui a la capacité de détecter et corriger une erreur dans un mot, .et de détecter (sans pouvoir alors les corriger) deux erreurs dans le même mot. La largeur du code de Hamming, et donc l'augmentation de la capacité mémoire nécessaire, dépend de la valeur de M. Par exemple, pour M=16, on a couramment N=6.

Comme décrit dans le document référencé [5], l'EDAC 20 travaille sur le bus de données, et fonctionne en parallèle avec le module de décodage 14 qui travaille sur le bus d'adresses 13. La fonction réalisée par l'EDAC étant plus complexe, le temps de propagation de celui-ci 20 est supérieur à celui du module de décodage 14 et ralentit donc les accès mémoire d'un coeur unité centrale protégé par un tel composant. La capacité des boîtiers mémoires augmentant, le nombre de boîtiers se réduit (notamment dans le domaine embarqué, tels que automobile, aéronautique ou spatial par exemple, qui utilise des petites capacités mémoire). Par conséquent, le module de décodage 14 se simplifie et devient de façon inhérente de plus en plus rapide. Le ralentissement dû à l'EDAC 20 devient donc de plus en plus pénalisant.

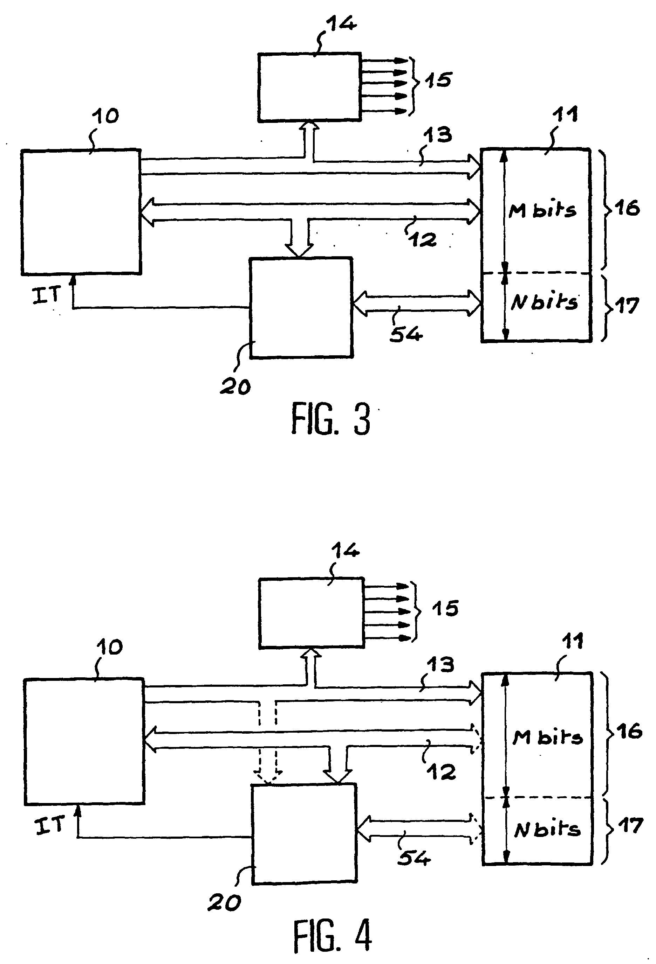

Deux types d'architectures d'EDAC existent :
- L'EDAC dans une architecture série, illustrée sur la figure 2 (ou "flow-through" voire "feed-through"), est un composant inséré sur le bus de données 12 entre le microprocesseur 10 et sa mémoire 11 comme décrit dans les documents référencés [1], [3] et [4].
- L'EDAC, dans une architecture parallèle illustrée sur la figure 3 (ou "bus-watch") est un composant connecté au bus de données 12 comme un périphérique. Il capture les données et les traite avant de valider l'accès mémoire, comme décrit dans le document référencé [2]. L'EDAC 20 est relié à la mémoire 11 par un bus 54.

L'EDAC 20, qui est un composant très souvent employé dans le domaine spatial, devient de plus en plus pénalisant au fur et à mesure de l'augmentation des fréquences d'horloge des microprocesseurs. Ce composant est d'autant plus critique avec des microprocesseurs à architecture RISC ("Reduced Instruction Set Computer" ou microprocesseur à jeu d'instructions réduit) qui accèdent à la mémoire presque à chaque cycle : Il est nécessaire d'ajouter des cycles d'attente ("wait-states") pour laisser le temps à l'EDAC 20 de fonctionner, sinon il faut ralentir la fréquence de fonctionnement du microprocesseur.

Dans le domaine spatial, les fréquences des microprocesseurs sont actuellement de l'ordre de quelques dizaines de MHz. Dans le domaine de l'informatique industrielle, ces fréquences sont actuellement d'un ordre de grandeur ou deux plus élevé : Ainsi, des microprocesseurs fonctionnant à 1 GHz commencent à apparaître.

La recherche d'un mode de fonctionnement plus performant de l'EDAC n'introduisant aucun ralentissement est, par conséquent, devenu une nécessité dans le domaine de l'informatique industrielle.

Comme décrit dans le document référencé [6], il est également connu d'utiliser une mémoire cache de 8 mots, associée à un générateur de vecteurs de test, qui permet de traiter de façon plus efficace qu'un EDAC, d'un point de vue temps de propagation, le problème d'adresses mémoire défaillantes suite à une panne définitive de bits isolés. Un tel système ne fonctionne cependant que pour les pannes définitives de quelques bits, ce qui est une configuration peu fréquente. Il n'est pas adapté au traitement des erreurs temporaires de type événements singuliers. Le document référencé [6] précise que ce système doit être associé à un EDAC pour pouvoir les prendre en compte.

Comme décrit dans le document référencé [8], il est également connu de mettre en parallèle avec une unité d'exécution un dispositif de détection/correction d'erreurs mémoire EDAC qui laisse pénétrer dans l'unité d'exécution une donnée ou une instruction sans la vérifier au préalable. Cette donnée est également écrite dans un cache primaire L1 une fois que la détection a vérifié qu'elle est exempte d'erreur. Cette donnée passant à travers l'EDAC (donc corrigée si besoin) est écrite avec un certain retard dans un cache secondaire L2.

Si l'EDAC détermine après coup que cette donnée ou cette instruction est erronée, son utilisation est avortée et le cache L1 n'est pas mis à jour. L'unité de traitement va alors rechercher une deuxième fois cette donnée qui se trouve alors, corrigée, dans le cache L2, exempte d'erreur cette fois-ci, sans avoir besoin d'aller une deuxième fois en mémoire. Le cache L1 est ensuite également mis à jour avec cette valeur corrigée.

Ce dispositif permet de ne pas ralentir le microprocesseur lors d'un accès en lecture à la mémoire ; mais pour cela il nécessite d'être utilisé avec une architecture à deux niveaux de cache (primaire L1 et secondaire L2), contrôlés par l'EDAC.

Comme décrit dans le document référencé [9], il est également connu de mettre en parallèle avec un microprocesseur un dispositif de détection/correction d'erreurs mémoire EDAC qui laisse pénétrer dans le microprocesseur une donnée ou une instruction sans la vérifier au préalable. Si l'EDAC détermine après coup que cette donnée ou cette instruction est erronée, il corrige alors de lui-même la mémoire.

Le microprocesseur doit lui-même vérifier en interne si la donnée ou l'instruction est exempte d'erreur. Pour cela, il doit intégrer un codage de détection seule d'erreur, c'est-à-dire une parité. Lorsque le microprocesseur écrit en mémoire un mot, il calcule et écrit simultanément le code de parité associé qui est rangé dans la partie "donnée" (indépendante de la partie "code de correction"). Lorsqu'il lit en mémoire, il accède au mot et à son code de parité pendant que l'EDAC accède en plus à son code de correction.

Si le microprocesseur détecte une erreur de parité, il s'interrompt et il va alors rechercher de nouveau le même mot en mémoire. Pendant le temps du traitement en interne de cette interruption par le microprocesseur, l'EDAC qui fonctionne en parallèle a eu le temps de détecter l'erreur grâce au code de détection (parité), de la corriger grâce au code de correction, et de ré-écrire la valeur corrigée en mémoire. Ainsi, la valeur qui est lue pour la deuxième fois en mémoire par le microprocesseur est, cette fois-ci, exempte d'erreur.

Cette partie du dispositif permet de ne pas ralentir le microprocesseur lors d'un accès en lecture à la mémoire ; mais pour cela il nécessite d'être utilisé avec un microprocesseur qui intègre un codage de parité.

Dans le cas de la réalisation d'une unité de traitement dans un ASIC ("Application Specific Integrated Circuit", ou circuit intégré spécifique d'une application), ce dispositif apporte une complexification et un ralentissement du fonctionnement dus à l'ajout d'un code de parité en série sur les accès mémoire.

Par ailleurs, lorsque le microprocesseur écrit un mot (avec sa parité) en mémoire, ce mot est écrit directement sans attendre le calcul de son code de correction ; ce dernier est écrit plus tard par l'EDAC dès son calcul réalisé. Si le microprocesseur accède en lecture à ce même mot immédiatement après son écriture en mémoire, le code de correction n'est pas encore disponible en mémoire mais le microprocesseur n'en a pas besoin ; seule la parité lui est nécessaire, le code de correction n'est utile qu'à l'EDAC qui en dispose directement dès son calcul réalisé.

Cette partie du dispositif permet de ne pas ralentir le microprocesseur lors d'un accès en écriture à la mémoire ; mais pour cela elle nécessite une mémoire où la partie "donnée et code de détection" et la partie "code de correction" sont accessibles indépendamment.

L'objet de l'invention est de fournir un dispositif et un procédé de détection et correction d'erreurs mémoire qui permettent de protéger la mémoire sans pénalité en performance sur les temps d'accès, contrairement aux dispositifs de l'art connu.

### Exposé de l'invention

La présente invention concerne un dispositif de détection et correction d'erreurs mémoire dans un système électronique tel que revendiqué dans la revendication 1.

Avantageusement les moyens de détection/correction comportent des moyens de vérification du mot lu en mémoire aptes à être activés en parallèle avec sa progression à l'intérieur des étages pipeline du composant électronique. Ils comportent des moyens de génération d'une interruption au composant, activés lorsqu'ils détectent une erreur sur le mot lu en mémoire, afin que la progression de ce mot erroné à l'intérieur des étages pipeline du composant soit interrompue avant qu'il ne soit transmis à l'étage pipeline d'exécution. Ils comportent des moyens disposant d'une connexion au bus d'adresses qui permettant, suite à une détection d'erreur, de réécrire directement en mémoire un mot corrigé.

Dans un mode de réalisation avantageux, ils comportent en outre des moyens de codage des données mis en série sur les accès mémoire, et structurés en étages pipeline de façon à avoir le même débit que le composant électronique lorsque celui-ci écrit en mémoire, en particulier pendant les transferts de blocs. Ledit dispositif dispose alors d'une connexion au bus d'adresses, et de moyens de cheminement des adresses comprenant un. ensemble de registres pipeline connectés en série dans lesquels est réalisé le transport des adresses capturées, le nombre de ces registres pipeline étant identique au nombre d'étages pipeline des moyens de codage afin que ces adresses se propagent dans le dispositif au même rythme que les mots à coder. Il comprend un comparateur câblé sur chaque registre pipeline des moyens de cheminement des adresses, ces comparateurs permettant une comparaison temps réel entre toutes les adresses qui se trouvent à l'intérieur du dispositif à un moment donné et l'adresse du mot que le composant électronique souhaite lire en mémoire à ce moment là. Dans un mode de réalisation avantageux, il peut comprendre des moyens introduisant des cycles mémoire d'attente au composant électronique lorsque l'un des comparateurs détecte la présence de l'adresse du mot que le composant souhaite lire en mémoire, ces moyens permettant de laisser le temps au mot de se propager dans les derniers étages pipeline du dispositif afin que celui-ci puisse écrire en mémoire ce mot et son code associé avant que le composant ne les lise. Ou alors, dans un autre mode de réalisation avantageux il peut comprendre, des moyens de multiplexage permettant lorsque l'un des comparateurs détecte la présence de l'adresse du mot que le composant souhaite lire en mémoire, de fournir ce mot au composant quel que soit l'étage pipeline où il se trouve et d'inhiber les moyens de détection d'erreurs du dispositif sur ce mot puisque son code associé n'a pas eu le temps d'être complètement calculé.

L'invention concerne également un procédé de détection et correction d'erreurs mémoire dans un système électronique tel que revendiqué dans la revendication 9.

Avantageusement la vérification du mot lu en mémoire s'effectue en parallèle avec sa progression à l'intérieur des étages pipeline du composant électronique, afin de s'assurer qu'il n'est pas erroné, permettant ainsi de masquer le temps de fonctionnement du dispositif par le temps de propagation dans les premiers étages pipeline du composant. Lorsqu'une erreur est détectée sur le mot lu en mémoire, le cheminement du mot dans les étages pipeline du composant électronique est interrompu avant que ce mot erroné ne puisse être effectivement utilisé par une unité de traitement de ce composant. Lorsqu'une erreur est détectée sur un mot lu en mémoire, et après sa correction, ce mot corrigé est directement réécrit en mémoire sans intervention du composant électronique.

Dans un mode de réalisation avantageux les mots que doit écrire le composant électronique en mémoire sont capturés, puis codés avec un code quelconque de détection/correction d'erreur, puis écrits en mémoire ; le codage étant structuré en étages pipeline de façon à avoir le même débit que le composant lorsque celui-ci écrit en mémoire et, ainsi, ne pas le ralentir, en particulier pendant les transferts de blocs. Les adresses sont capturées en même temps que les mots à coder, et ces adresses se propagent à l'intérieur d'étages pipeline au même rythme que les mots à coder. Toutes les adresses présentes dans les étages pipeline sont comparées en temps réel à l'adresse du mot que le composant électronique souhaite lire, ceci afin de détecter si le mot recherché par le composant n'a pas été écrit très récemment et ne se trouve pas encore dans ces étages pipeline. Si un mot que le composant électronique souhaite lire en mémoire se trouve encore dans les étages pipeline, on peut introduire des cycles mémoire d'attente au composant électronique pour attendre que se finalise le calcul de code et l'écriture en mémoire de ce mot et de son code associé avant que le composant ne les lise, ou le mot peut être directement fourni au composant en inhibant alors la détection d'erreur sur ce mot puisque son code associé n'a pas eu le temps d'être complètement calculé.

Le procédé de l'invention peut être utilisé dans un système électronique embarqué tel que par exemple sur une voiture ou sur un avion.

Il peut également être utilisé dans le domaine spatial.

Le dispositif de l'invention est indépendant du code utilisé pour détecter/corriger les erreurs (Hamming, Reed-Solomon, etc...), et se suffit d'un code unique de détection/correction. Les deux parties de la mémoire allouées l'une aux données et l'autre à leurs codes de détection/correction sont accédées de façon usuelle, c'est-à-dire simultanément. Le dispositif est aussi bien adapté à des architectures sans mémoire cache qu'à des architectures avec un ou plusieurs niveaux de mémoire cache.

Les réalisations classiques d'EDAC série ou parallèle réduisent la performance du système électronique en augmentant les temps d'accès à la mémoire. Le dispositif de l'invention permet de profiter pleinement des performances du composant électronique (par exemple un microprocesseur) puisque :
- la fonction de détection/correction travaille en parallèle, donc en temps masqué, avec la propagation de l'instruction ou de la donnée dans le pipeline du composant électronique,
- la fonction codage est pipelinée pour offrir le même débit que le composant électronique lui-même, une structure en "mémoire associative" permettant de résoudre les problèmes de non cohérence de la mémoire lors d'accès rapprochés en écriture puis en lecture sur le même mot.

### Brève description des dessins

- La figure 1 illustre un système électronique de l'art connu avec une mémoire non protégée.
- Les figures 2 et 3 illustrent ce système électronique de l'art connu avec une mémoire protégée par un EDAC classique, respectivement dans une architecture série et dans une architecture parallèle.
- La figure 4 illustre ce système électronique avec une mémoire protégée selon l'invention pour la fonction détection/correction, seules les phases de lecture mémoire étant représentées.
- La figure 5 illustre le diagramme temporel du fonctionnement de l'invention pour la fonction de détection/correction, dans une hypothèse sans mémoire cache.
- La figure 6 illustre le système électronique, la mémoire étant protégée par un dispositif incluant uniquement la fonction de codage des données, seules les phases d'écriture mémoire étant représentées.
- La figure 7 illustre l'architecture interne du dispositif de l'invention pour la fonction de codage (exemple à trois étages pipeline).
- La figure 8 illustre l'architecture du dispositif de l'invention intégrant à la fois les fonctions de détection/correction et codage.
- Les figures 9 et 10 illustrent les flots de données à l'intérieur du dispositif de l'invention intégrant à la fois les fonctions de codage et de détection/correction respectivement pour l'écriture de la mémoire et pour la lecture de la mémoire.

### Exposé détaillé de modes de réalisation

La présente invention concerne un dispositif de détection et correction d'erreurs mémoire dans un système électronique comprenant un composant électronique comportant plusieurs étages pipeline et une mémoire. Par "composant électronique", on entend un circuit ou un ensemble de circuits intégrés, qui réalise une fonction nécessitant une mémoire, cette fonction pouvant être conçue à partir d'un opérateur ou processeur câblé (voir le document référencé [7] page 20 et page 106), d'un processeur en tranches ("bit slices", voir le document référencé [7] pages 106 à 109), ou d'un microprocesseur par exemple. Dans la suite de la description, on utilise le mot "microprocesseur" car celui-ci est le plus représentatif.

Le dispositif de détection et de correction d'erreurs mémoire selon l'invention inclut :
- des moyens de détection/correction activés lorsque le microprocesseur lit la mémoire,
- et éventuellement des moyens de codage activés lorsque le microprocesseur écrit la mémoire.

### Moyens de détection/correction

La fonction de détection/correction du dispositif de l'invention est basée sur le fait que, pour améliorer la performance des microprocesseurs modernes, ceux-ci disposent d'un nombre d'étages pipeline de plus en plus important, fonctionnant comme décrit dans le document référencé [7] aux pages 11 à 15.

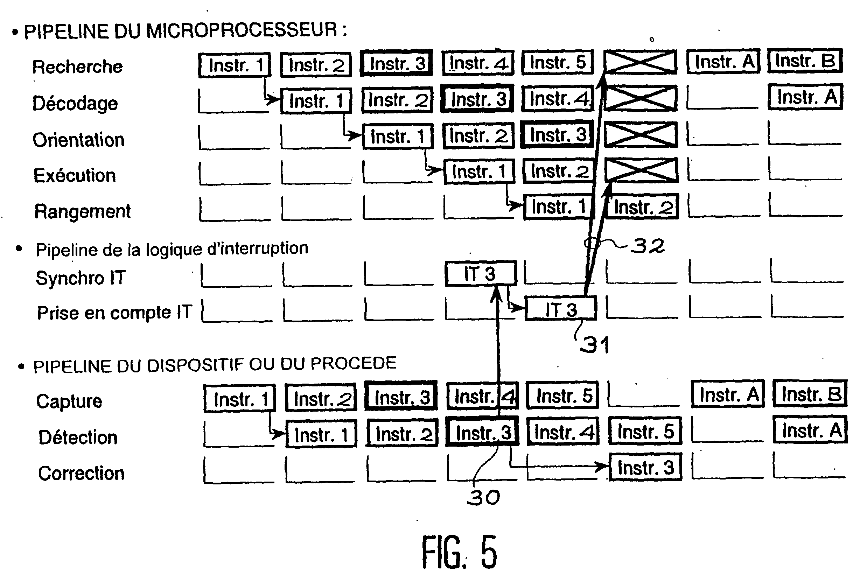

Comme illustré sur la figure 4, le dispositif de détection et correction d'erreurs mémoire incluant ces moyens de détection/correction 20 est mis en parallèle sur les accès mémoire du microprocesseur 10. Son temps de propagation n'est plus en série vis-à-vis du microprocesseur 10 comme dans le cas d'un EDAC série ou parallèle, mais en parallèle. Il est donc masqué.

L'objectif de l'invention est de pouvoir dégager suffisamment de temps au dispositif de détection et correction d'erreurs mémoire pour le laisser fonctionner sans ralentir les accès mémoire. Grâce aux nombreux étages pipeline, ce dispositif permet de laisser rentrer l'instruction ou la donnée potentiellement erronée dans ces étages pipeline du microprocesseur sans la vérifier préalablement, mais en la vérifiant en parallèle. En cas d'erreur détectée par ce dispositif, ce dernier interrompt le cheminement de l'instruction ou de la donnée avant qu'elle ne soit exécutée ou utilisée effectivement par une unité de traitement interne au microprocesseur.

Le fonctionnement du dispositif de l'invention est illustré sur le diagramme temporel de la figure 5, correspondant à un exemple de réalisation de ce dispositif, en utilisant un microprocesseur générique, celui-ci dispose de cinq étages pipeline : un étage de recherche de l'instruction ("fetch"), un étage de décodage, un étage d'orientation vers une unité de traitement, un étage d'exécution, et un étage de rangement du résultat obtenu. Ce microprocesseur intègre une logique de traitement d'interruption (IT) incluant un étage de synchronisation des événements externes asynchrones IT et un étage de prise en compte de l'interruption IT. Les instructions non exécutées après l'activation de cet étage de prise en compte des interruptions sont inhibées et le microprocesseur recharge totalement son pipeline (création d'une "bulle" dans le pipeline comme décrit dans le document référencé [7] aux pages 11 à 15). Le dispositif de détection et correction d'erreurs mémoire dispose de trois étages pipeline : :un étage de capture de la donnée ou de l'instruction et de son code passant sur le bus de données du microprocesseur, un étage de calcul du code et de comparaison avec le code capturé, la comparaison générant une interruption au microprocesseur en cas de détection de non égalité entre les deux codes, et un étage de réécriture de la donnée corrigée en mémoire lorsque nécessaire.

Pour la fonction de détection/correction, lors d'une lecture en mémoire externe de données ou d'instructions, le fonctionnement est le suivant :
- le microprocesseur accède en lecture à un mot (i.e. simultanément à la donnée et à son code associé) stocké en mémoire externe sans aucun ralentissement dû au dispositif de détection et correction d'erreurs mémoire.
- Ce mot est "capturé" par le dispositif en même temps qu'il l'est par le microprocesseur.
- La détection (et éventuellement la correction) est à la charge seule du dispositif.
- Le dispositif travaille en parallèle avec la progression de l'instruction ou de la donnée dans les niveaux pipeline (par exemple K étages) du microprocesseur. Le dispositif dispose du temps qui est nécessaire à ce mot pour arriver jusqu'à l'unité d'exécution (a priori K-2 cycles, l'étage K-1 étant généralement l'exécution, et l'étage K le stockage du résultat).
- En cas de détection 30 d'une erreur (Instr.3 sur la figure 5), le dispositif interrompt (31) le microprocesseur par une interruption avant que cette instruction/donnée ne soit exécutée/ utilisée.
- Dans ce cas, deux options se présentent :
   - soit le dispositif se contente de corriger le mot et de le présenter sur son bus, le microprocesseur se charge alors d'aller corriger la mémoire,
   - soit le dispositif réécrit directement en DMA ("Direct Access Memory" ou accès direct à la mémoire) le mot corrigé en mémoire. Ceci est possible dans l'hypothèse où le dispositif est connecté au bus d'adresses et peut écrire en mémoire comme représenté en pointillés à la figure 4, ces éléments en pointillés étant par ailleurs nécessaires à la fonction de codage.
- L'effet de l'interruption est simplement de forcer une "purge" 32 des niveaux pipeline du microprocesseur grâce à l'exécution des quelques instructions de ce programme d'interruption (a priori vide, et contenant éventuellement des NOP ("No Operation", c'est-à-dire "nulle" qui ne donne lieu à aucune opération) si les instructions de branchement et de retour d'interruption ne suffisent pas à assurer cette purge). La purge permet de supprimer les quelques mots en train de progresser dans le pipeline du microprocesseur (dont le mot erroné Instr.3). Le microprocesseur va alors rechercher une nouvelle fois ces mots en mémoire externe (le mot erroné Instr.3 ayant entre-temps été corrigé en mémoire externe directement par le dispositif en DMA, dans ce cas le mot Inst.A à la figure 5 peut être le mot corrigé Instr.3, ou par le microprocesseur avec l'aide du dispositif).

On introduit donc une "bulle" dans le pipeline du microprocesseur à chaque détection d'erreur ; l'impact sur la performance étant négligeable, étant donné la faible densité des événements singuliers.

Pour déterminer le nombre de cycles disponibles pour que le dispositif puisse exécuter sa phase de détection, on vérifie au cas par cas en fonction.du microprocesseur utilisé jusqu'à quel niveau pipeline le mot potentiellement erroné peut progresser afin d'être sûr qu'à ce moment là, l'arrivée d'une interruption sur une broche externe du microprocesseur puisse interrompre la progression de ce mot vers l'unité d'exécution. Pour cela on prend également en compte la latence (c'est-à-dire le retard) due à l'échantillonnage puis l'exécution d'une interruption suite aux étages pipeline potentiels dans le cheminement de cette interruption.

Si une mémoire cache est intégrée sur la puce du microprocesseur, on purge en plus le cache sur l'apparition de l'interruption de détection d'erreur. Cela peut être fait dans le programme de l'interruption qui est liée au dispositif. La mise en oeuvre de cette fonction dépend de la spécificité du microprocesseur. Par exemple, pour le PowerPC 603e de Motorola, il est possible de purger le cache instructions à l'aide d'une seule instruction (le cycle suivant, le microprocesseur considère que le cache instructions est vide). Mais le cache données ne peut qu'être "flushé", c'est-à-dire qu'il doit être vidé entièrement : i.e. les blocs contenant des données mises à jour à l'intérieur du cache sont sauvegardés en mémoire. Dans le cas où un cache doit être "flushé" sur détection d'erreur mémoire, il faut que le dispositif laisse le "flush" se finaliser (le "flush" va alors sauvegarder la donnée erronée) avant d'effectuer la correction en mémoire.

### Moyens de codage

La fonction de codage des données du dispositif de l'invention est basée sur le fait que, pour améliorer la performance des microprocesseurs modernes, ceux-ci intègrent des mémoires caches internes, et les écritures en mémoire externes se font alors la plupart du temps par des transferts de blocs ("flush" ou mode rafale, i.e., une donnée à chaque cycle et ceci de façon continue pour tout le bloc).

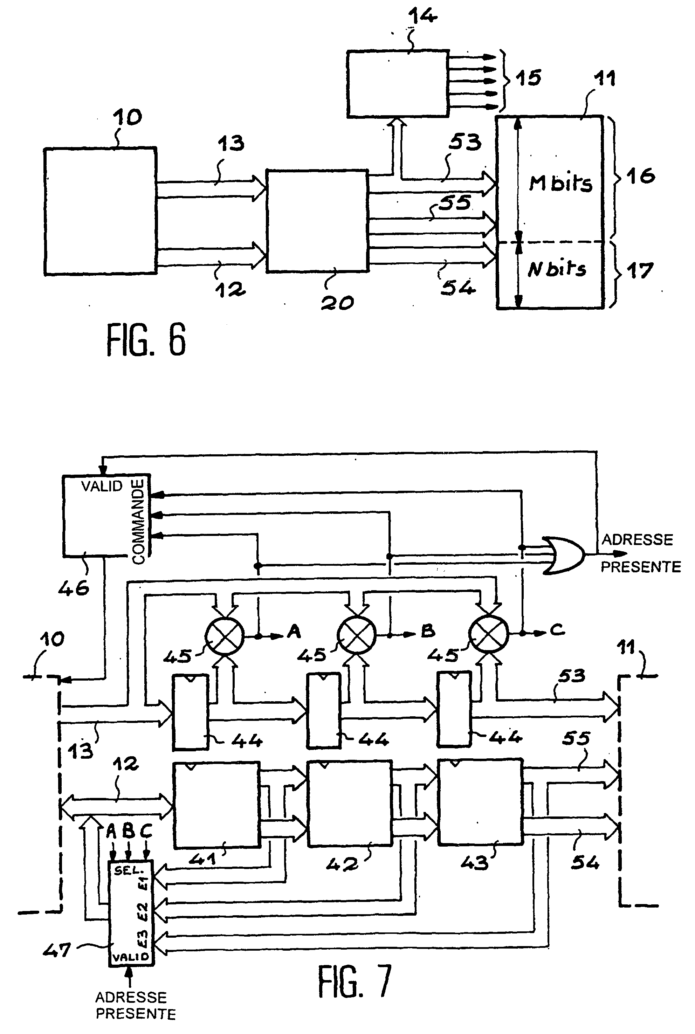

Comme illustré sur la figure 6, le dispositif de l'invention incluant la fonction de codage est mis en série sur les accès mémoire du microprocesseur. Son temps de propagation reste en série vis-à-vis du microprocesseur mais ne le ralentit pas grâce à un fonctionnement pipeline. Ce fonctionnement nécessite de connecter le dispositif au bus d'adresses contrairement aux EDACs classiques.

Tout accès en écriture à la mémoire permet d'écrire simultanément la donnée et son code associé. Le dispositif de l'invention se suffit d'un code unique de détection/correction (Hamming, Reed-Solomon, etc.).

Les moyens de codage du dispositif sont partagés en étages pipeline 41, 42, 43, et utilisent un fonctionnement de type "mémoire associative" comme illustré sur la figure 7.

Si la durée des accès mémoire du microprocesseur est de T, et si le temps de codage du dispositif est inférieur à P fois T, alors la fonction codage est partagée en P étages pipeline 41, 42, 43, chacun ayant un temps de propagation T.

Les mots de données sont chargés dans le premier étage 41 du dispositif au rythme des écritures du microprocesseur, puis ils sont écrits en mémoire par le dispositif avec P cycles de retard mais au même rythme (donc, sans ralentir le microprocesseur).

En parallèle, les adresses associées à chaque donnée sont chargées dans le dispositif et retardées par P simples registres pipeline 44 connectés en série pour rester en phase avec leur donnée.

Si une donnée écrite doit être relue avec un délai inférieur à P cycles mémoire, la mémoire n'est plus en cohérence. Il faut donc que la fonction de codage du dispositif soit structurée comme une mémoire associative, un comparateur 45 câblé sur chaque étage du pipeline des adresses permet de comparer en temps réel ces P adresses à l'adresse du mot que le microprocesseur souhaite lire. Si l'un des comparateurs détecte que la donnée est dans le pipeline du dispositif (signal "adresse présente" activé, ou "adress-hit"), on peut :
- soit introduire, grâce à un générateur de cycles d'attente 46, des cycles mémoire d'attente ("wait-states") au microprocesseur pour laisser le dispositif finaliser son calcul de code, et laisser le microprocesseur accéder à ce mot uniquement une fois qu'il a été écrit en mémoire avec son code associé. L'avantage est alors de banaliser sa nouvelle lecture ;
- soit directement fournir la donnée au microprocesseur grâce à un multiplexage (multiplexeur 47) sur la sortie "donnée" de tous les étages pipeline 41, 42, 43, mais en inhibant alors la détection d'erreur du dispositif sur ce mot puisque le code n'a pas eu le temps d'être complètement calculé. L'avantage est alors le gain en performance.

Etant donné la faible densité des événements singuliers, donc la perte négligeable en performance, la première solution (introduction de cycles d'attente) est préférable.

Le fonctionnement de ces deux solutions (en logique positive) est illustré dans les tableaux 1 et 2 en fin de description.

### Intégration des moyens de détection/correction et de codage

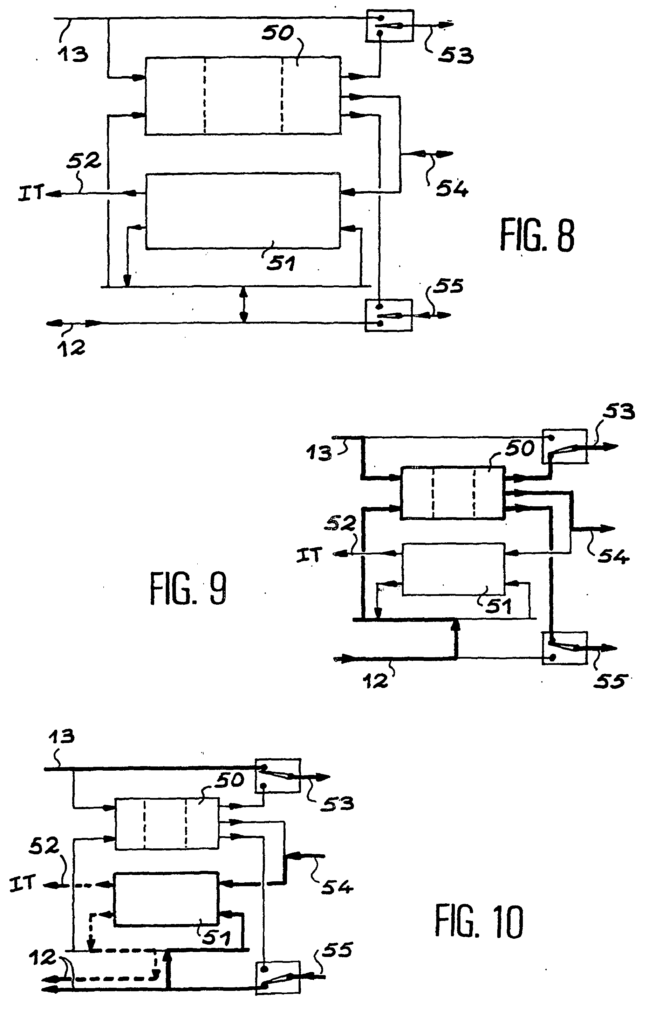

La fonction de détection/correction nécessitant une architecture de type série, et la fonction de codage de type parallèle, l'intégration des deux fonctions dans un même composant nécessite l'utilisation de multiplexeurs. L'architecture d'un tel composant est montrée à la figure 8, et les flots de données selon qu'il s'agit d'une phase d'écriture de la mémoire (activant la fonction de codage) ou d'une phase de lecture de la mémoire (activant la fonction de détection/correction) sont illustrés respectivement aux figures 9 et 10.

Sur ces figures 8, 9 et 10 sont représentés :
- un module 50 correspondant à la fonction codage (exemple de 3 étages pipeline),
- un module 51 correspondant à la fonction détection/correction,
- le bus adresses microprocesseur 13,
- le bus données microprocesseur 12,
- une ligne interruption microprocesseur 52,
- le bus adresses mémoire 53,
- le bus codes mémoire 54,
- le bus données mémoire 55.

**Tableau 1**

| Tableau de fonctionnement du générateur de cycles d'attente 46 | | | | |
|---|---|---|---|---|
| Validation | Commande | | | Attente |
| | A | B | C | |
| 0 | 0 | 0 | 0 | 0 cycle |
| 1 | 0 | 0 | 1 | 1 cycle |
| 1 | 0 | 1 | 0 | 2 cycles |
| 1 | 1 | 0 | 0 | 3 cycles |

**Tableau 2**

| Tableau de fonctionnement du multiplexeur 47 | | | | |
|---|---|---|---|---|
| Validation | Sélection | | | Sortie |
| | A | B | C | |
| 0 | 0 | 0 | 0 | Isolée |
| 1 | 0 | 0 | 1 | E3 |
| 1 | 0 | 1 | 0 | E2 |
| 1 | 1 | 0 | 0 | E1 |

### REFERENCES

[1] "29C516E-16 bits flow-through EDAC unit" (document TEMIC Semiconductors, rév. D, 09/12/97).
[2] "29C532E-32 bits bus-watch EDAC unit" (document TEMIC Semiconductors, rév. B, 26/02/97).
[3] "MA31752-16 bits feed-through EDAC unit" (document GEC Plessey Semiconductors, réf. DS3569-2.4).
[4] "MA31755-16 bits feed-through EDAC unit" (document GEC Plessey Semiconductors, réf. DS3572-2.2).
[5] "Two error-detecting and correcting circuits for space applications" de R. Johansson (Proceedings of 26^{th} IEEE Fault Tolerant Computing Symposium, 1996).
[6] "Memory system reliability improvement through associative cache redundancy", de M.A. Lucente, C.H. Harris et R.M. Muir (IEEE Journal of Solid-State Circuits, Vol. 26, n° 3, mars 1991).
[7] "Réalisation d'un mini-processeur vectoriel travaillant en arithmétique flottante 32 bits, adapté au traitement fréquentiel d'images" de Michel Pignol (Thèse de docteur ingénieur en électronique présentée à l'université de Clermont II le 12 septembre 1986).
[8] US 5 630 055
[9] US 4 604 750

## Revendications

1. Dispositif de détection et correction d'erreurs mémoire dans un système électronique comprenant un composant électronique (10) comportant K étages pipeline et une mémoire (11) pour laquelle les accès aux données et à leurs codes associés sont simultanés, **caractérisé en ce qu'**il comprend des moyens de détection/correction (20) grâce à un code unique de détection/correction, ces moyens permettant de fonctionner avec ou sans mémoire cache et étant mis en parallèle sur les accès mémoire, ces moyens étant activés chaque fois que le composant lit un mot en mémoire, ces moyens (20) laissant pénétrer ce mot dans le composant (10) avant de le vérifier, ces moyens permettant d'allouer un nombre de « cycle bus » important à la détection d'erreurs équivalent à K-2, nombre augmentant avec l'augmentation du nombre d'étages pipeline des composants électronique (10), ces moyens de détection/correction (20) comportant des moyens de génération d'une interruption au composant électronique (10), activés lorsqu'ils détectent une erreur sur le mot lu en mémoire, afin que la progression de ce mot erroné à l'intérieur des étages pipeline du composant (10) soit interrompue avant qu'il ne soit transmis à l'étage pipeline d'exécution et ainsi ne puisse modifier le contenu des registres internes du composant (10) puisque l'étage pipeline du stockage du résultat ne sera pas atteint.

2. Dispositif selon la revendication 1, dans lequel les moyens de détection/correction (20) comportent des moyens de vérification du mot lu en mémoire aptes à être activés en parallèle avec sa progression à l'intérieur des étages pipeline du composant électronique.

3. Dispositif selon la revendication 1, dans lequel les moyens de détection/correction (20) comportent des moyens disposant d'une connexion au bus d'adresses qui permettent, suite à une détection d'erreur, de réécrire directement en mémoire un mot corrigé.

4. Dispositif selon la revendication 1 comportant en outre des moyens de codage des données mis en série sur les accès mémoire, et structurés en étages pipeline de façon à avoir le même débit que le composant électronique (10) lorsque celui-ci écrit en mémoire, en particulier pendant les transferts de blocs.

5. Dispositif selon la revendication 4 disposant d'une connexion au bus d'adresses, et de moyens de cheminement des adresses, comprenant un ensemble de registres pipeline (44) connectés en série, dans lesquels est réalisé le transport des adresses capturées, le nombre de ces registres pipeline étant identique au nombre d'étages pipeline des moyens de codage (41, 42, 43) afin que ces adresses se propagent dans le dispositif au même rythme que les mots à coder.

6. Dispositif selon la revendication 5 comprenant un comparateur (45) câblé sur chaque registre pipeline (44) des moyens de cheminement des adresses, ces comparateurs (45) permettant une comparaison temps réel entre toutes les adresses qui se trouvent à l'intérieur du dispositif à un moment donné et l'adresse du mot que le composant électronique (10) souhaite lire en mémoire à ce moment là.

7. Dispositif selon la revendication 6 comprenant de moyens (46) introduisant des cycles mémoire d'attente au composant électronique lorsque l'un des comparateurs détecte la présence de l'adresse du mot que le composant souhaite lire en mémoire, ces moyens permettant de laisser le temps au mot de se propager dans les derniers étages pipeline du dispositif afin que celui-ci puisse écrire en mémoire ce mot et son code associé avant que le composant ne les lise.

8. Dispositif selon la revendication 6 comprenant des moyens de multiplexage (47) permettant lorsque l'un des comparateurs détecte la présence de l'adresse du mot que le composant souhaite lire en mémoire, de fournir ce mot au composant quel que soit l'étage pipeline où il se trouve et d'inhiber les moyens de détection d'erreurs du dispositif sur ce mot puisque son code associé n'a pas eu le temps d'être complètement calculé.

9. Procédé de détection et correction d'erreurs mémoire dans un système électronique comprenant un composant électronique (10) comportant K étages pipeline et une mémoire structurée avec ou sans mémoire cache pour laquelle les accès aux données et à leurs codes associés sont simultanés, **caractérisé en ce que** chaque mot constitué d'une donnée et de son code unique de détection/correction lu en mémoire par le composant électronique n'est pas vérifié préalablement à la capture de ce mot par le composant, cette vérification de la présence d'une erreur dans ce mot disposant d'un nombre de « cycle bus » important pour se réaliser équivalent à K-2, nombre augmentant avec l'augmentation du nombre d'étages pipeline des composants électroniques (10), et lorsqu'une erreur est détectée sur le mot lu en mémoire, le cheminement du mot dans les étages pipeline du composant électronique est interrompu avant que ce mot erroné ne puisse être effectivement utilisé par une unité de traitement de ce composant (10) et ainsi ne puisse modifier le contenu des registres internes de ce composant (10) puisque aucun résultat ne sera généré, le pipeline étant purgé après l'interruption seulement de la donnée erronée et des suivantes qui ont pénétré dans le composant avant qu'il ne soit interrompu.

10. Procédé selon la revendication 9, dans lequel la vérification du mot lu en mémoire s'effectue en parallèle avec sa progression à l'intérieur des étages pipeline du composant électronique, afin de s'assurer qu'il n'est pas erroné, permettant ainsi de masquer le temps de fonctionnement du dispositif par le temps de propagation dans les premiers étages pipeline du composant.

11. Procédé selon la revendication 9, dans lequel, lorsqu'une erreur est détectée sur un mot lu en mémoire, et après sa correction, ce mot corrigé est directement réécrit en mémoire sans intervention du composant électronique.

12. Procédé selon la revendication 9, dans lequel les mots que doit écrire le composant électronique en mémoire sont capturés, puis codés avec un code quelconque de détection/correction d'erreur, puis écrits en mémoire ; le codage étant structuré en étages pipeline de façon à avoir le m^me débit que le composant lorsque celui-ci écrit en mémoire et, ainsi, ne pas le ralentir, en particulier pendant les transferts de blocs.

13. Procédé selon la revendication 12, qui capture les adresses en même temps que les mots à coder, et dans lequel ces adresse se propagent a l'intérieur d'étages pipeline au même rythme que les mots à coder.

14. Procédé selon la revendication 13, dans lequel toutes les adresses présentes dans les étages pipeline sont comparées en temps réel à l'adresse du mot que le composant électronique souhaite lire, ceci afin de détecter si le mot recherché par le composant n'a pas été écrit très récemment et ne se trouve pas encore dans ces étages pipeline.

15. Procédé selon la revendication 14, dans lequel si un mot que le composant électronique souhaite lire en mémoire se trouve encore dans les étages pipeline, on introduit des cycles mémoire d'attente au composant électronique pour attendre que se finalise le calcul de code et l'écriture en mémoire de ce mot et de son code associé avant que le composant ne les lise.

16. Procédé selon la revendication 14, dans lequel si un mot que le composant électronique souhaite lire en mémoire se trouve encore dans les étages pipeline, ce mot est directement fourni au composant en inhibant alors la détection d'erreur sur ce mot puisque son code associé n'a pas eu le temps d'être complètement calculé.

17. Utilisation du dispositif selon l'une quelconque des revendications 1 à 8, dans un système électronique embarqué.

18. Utilisation du dispositif selon l'une quelconque des revendications 1 à 8, dans le domaine spatial.

## Patentansprüche

1. Vorrichtung zum Erfassen und Korrigieren von Speicherfehlern in einem elektronischen System mit einer elektronischen Komponente (10), die K Pipeline-Stufen sowie einen Speicher (11) umfasst, für den die Zugriffe zu Daten und zu den ihnen zugeordneten Codes gleichzeitig sind, **dadurch gekennzeichnet, dass** sie Erfassungs-/Korrekturmittel (20) anhand eines einzelnen bzw. einzigen Erfassungs-/Korrekturcodes umfasst, wobei diese Mittel mit oder ohne Cache-Speicher arbeiten können und parallel zu den Speicherzugängen geschaltet sind, diese Mittel jedes Mal dann aktiviert werden, wenn die Komponente ein Wort im Speicher liest, diese Mittel (20) dieses Wort in die Komponente (10) einlassen, bevor sie es prüfen, diese Mittel eine der Fehlererfassung hohe Zahl von "Buszyklen", welche K-2 entspricht, zuteilen können, die Zahl mit der Zunahme der Anzahl von Pipeline-Stufen der elektronischen Komponenten (10) zunimmt, und diese Erfassungs-/Korrekturmittel (20) Mittel zur Herstellung einer Unterbrechung an der elektronischen Komponente (10) umfassen, die aktiviert. werden, wenn sie einen Fehler an dem im Speicher gelesenen Wort entdecken, damit die Progression dieses fehlerhaften Worts innerhalb der Pipeline-Stufen der Komponente (10) unterbrochen wird, bevor es an die ausführende Pipeline-Stufe übertragen wird und somit nicht den Inhalt der internen Register der Komponente (10) modifizieren kann, da die Pipeline-Stufe der Speicherung des Ergebnisses nicht erreicht wird.

2. Vorrichtung nach Anspruch 1, wobei die Erfassungs-/Korrekturmittel (20) Mittel zur Überprüfung des im Speicher gelesenen Worts umfassen, die parallel zu dessen Progression innerhalb der Pipeline-Stufen der elektronischen Komponente aktiviert werden können.

3. Vorrichtung nach Anspruch 1, wobei die Erfassungs-/Korrekturmittel (20) Mittel umfassen, die über eine Verbindung zum Adress-Bus verfügen, welche nach einer Fehlererfassung ein direktes Wiedereinschreiben eines korrigierten Worts in den Speicher ermöglichen.

4. Vorrichtung nach Anspruch 1, ferner Datencodierungsmittel umfassend, die in Reihe mit den Speicherzugängen geschaltet und in Pipeline-Stufen so strukturiert sind, dass sie den gleichen Durchsatz wie die elektronische Komponente (10) aufweisen, wenn diese in den Speicher schreibt, insbesondere bei Blockübertragungen.

5. Vorrichtung nach Anspruch 4, die über eine Verbindung zum Adress-Bus sowie über Mittel zur Übertragung der Adressen verfügt, mit einer in Reihe geschalteten Einheit von Pipeline-Registern (44), in denen die Übertragung erfasster Adressen ausgeführt wird, wobei die Anzahl dieser Pipeline-Register identisch zu der Anzahl von Pipeline-Stufen der Codierungsmittel (41,42,43) ist, damit sich diese Adressen in der Vorrichtung im gleichen Rhythmus wie die zu codierenden Worte verbreiten bzw. bewegen.

6. Vorrichtung nach Anspruch 5 mit einer Vergleichsschaltung (45), die mit jedem Pipeline-Register (44) der Adressen-Übertragungsmittel verbunden ist, wobei diese Vergleichsschaltungen (45) einen Echtzeitvergleich zwischen allen Adressen, die sich zu einem gegebenen Augenblick in der Vorrichtung befinden, und der Adresse des Worts, welches die elektronische Komponente (10) in diesem Augenblick in dem Speicher lesen will, ermöglichen.

7. Vorrichtung nach Anspruch 6 mit Mitteln (46), die Speicherwartezyklen für die elektronische Komponente einführen, wenn eine der Vergleichsschaltungen das Vorhandensein der Adresse des Worts erfasst, welche die Komponente im Speicher lesen will, wobei diese Mittel dem Wort Zeit lassen, sich in die letzten Pipeline-Stufen der Vorrichtung weiterzu bewegen, damit diese das Wort und den diesem zugeordneten Code in den Speicher schreiben kann, bevor die Komponente sie liest.

8. Vorrichtung nach Anspruch 6 mit Multiplexmitteln (47), die, wenn eine der Vergleichsschaltungen das Vorhandensein der Adresse des Worts erfasst, welche die Komponente im Speicher lesen will, dieses Wort der Komponente unabhängig von der Pipeline-Stufe, auf der es sich befindet, liefern kann, und die Fehler-Erfassungsmittel der Vorrichtung an diesem Wort blockieren bzw. stoppen kann, da sein zugeordneter Code nicht rechtzeitig vollständig berechnet werden konnte.

9. Erfassungs- und Korrekturverfahren von Speicherfehlern in einem elektronischen System mit einer elektronischen Komponente (10), die K Pipeline-Stufen und einen mit oder ohne Cache-Speicher strukturierten Speicher aufweist, für den die Zugriffe zu den Daten und zu den ihnen zugeordneten Codes gleichzeitig sind, **dadurch gekennzeichnet, dass** jedes Wort, das aus einer Datengröße und deren eindeutigem Erfassungs-/Korrekturcode besteht, das von der elektronischen Komponente in dem Speicher gelesen wird, nicht vor dem Erfassen dieses Worts durch die Komponente überprüft wird, wobei diese Überprüfung das Vorhandensein eines Fehlers in diesem Wort über eine hohe Zahl von "Buszyklen" verfügt, um äquivalent zu K-2 realisiert zu werden, wobei die Zahl mit der Zunahme der Anzahl von Pipeline-Stufen der elektronischen Komponenten (10) zunimmt, und wenn ein Fehler an dem im Speicher gelesenen Wort erfasst wird, die Übertragung des Worts in den Pipeline-Stufen der elektronischen Komponente unterbrochen wird, bevor dieses fehlerhafte Wort tatsächlich von einer Bearbeitungseinheit dieser Komponente (10) verwendet werden kann, und somit nicht den Inhalt in den internen Registern dieser Komponente (10) modifizieren kann, da kein Resultat generiert wird, wobei die Pipeline nach der Unterbrechung nur von der fehlerhaften Datengröße und den nachfolgenden Daten, die in die Komponente eingedrungen sind, bevor sie unterbrochen wurde, gereinigt wird.

10. Verfahren nach Anspruch 9, wobei die Überprüfung des im Speicher gelesenen Worts parallel zu dessen Progression innerhalb der Pipeline-Stufen der elektronischen Komponente erfolgt, um zu gewährleisten, dass es nicht fehlerhaft ist, wodurch die Funktionszeit der Vorrichtung durch die Zeit der Ausbreitung in den ersten Pipeline-Stufen der Komponente überdeckt werden kann.

11. Verfahren nach Anspruch 9, wobei, wenn ein Fehler an einem im Speicher gelesenen Wort erfasst wird und nach seiner Korrektur, dieses korrigierte Wort ohne Intervention der elektronischen Komponente wieder direkt in den Speicher geschrieben wird.

12. Verfahren nach Anspruch 9, wobei die Worte, welche die elektronische Komponente in den Speicher zu schreiben hat, erfasst werden, dann mit einem beliebigen Code der Fehlererfassung-/korrektur codiert und anschließend in den Speicher geschrieben werden, wobei die Codierung in Pipeline-Stufen derart strukturiert ist, dass sie den gleichen Durchsatz wie die Komponente aufweist, wenn diese in den Speicher schreibt, und sich somit nicht verlangsamt, insbesondere bei Blockübertragungen.

13. Verfahren nach Anspruch 12, das die Adressen zur gleichen Zeit wie die zu codierenden Worte erfasst, und bei dem diese Adresse(n) sich innerhalb der Pipeline-Stufen mit dem gleichen Rhythmus bewegen wie die zu codierenden Worte.

14. Verfahren nach Anspruch 13, wobei alle in den Pipeline-Stufen vorhandenen Adressen in Echtzeit mit der Adresse des Worts, welches die elektronische Komponente lesen will, verglichen werden, um zu erfassen, ob das von der Komponente gesuchte Wort nicht gerade eben geschrieben worden ist und sich nicht noch in diesen Pipeline-Stufen befindet.

15. Verfahren nach Anspruch 14, wobei, wenn ein Wort, das die elektronische Komponente in dem Speicher lesen will, sich noch in den Pipeline-Stufen befindet, Speicherwartezyklen für die elektronische Komponente eingeführt werden, um abzuwarten, dass die Berechnung des Codes und das Schreiben dieses Worts und seines zugeordneten Codes in den Speicher abgeschlossen wird, bevor die Komponente sie liest.

16. Verfahren nach Anspruch 14, wobei, wenn ein Wort, das die elektronische Komponente im Speicher lesen will, sich noch in den Pipeline-Stufen befindet, dieses Wort direkt der Komponente geliefert wird, wobei die Fehlererfassung an diesem Wort blockiert wird, da sein zugeordneter Code nicht rechtzeitig vollständig berechnet worden ist.

17. Anwendung der Vorrichtung gemäß einem der Ansprüche 1 bis 8 in einem mitgeführten elektronischen System.

18. Anwendung der Vorrichtung gemäß einem der Ansprüche 1 bis 8 auf dem Gebiet der Raumfahrt.

## Claims

1. Device for detecting and correcting memory errors in an electronic system comprising an electronic component (10) having K pipeline stages and a memory (11) for which the accesses to the data and to their associated codes are simultaneous, **characterized in that** it comprises means of detection/correction (20) by virtue of a unique detection/correction code, these means making it possible to operate with or without cache memory and being placed in parallel with the memory ports, these means being activated each time the component reads a memory word, these means (20) allowing this word to enter the component (10) before verifying it, these means making it possible to allocate a significant number of "bus cycles" equivalent to K-2 to the detection of errors, which number increases with the increase in the number of pipeline stages of the electronic components (10), these means of detection/correction (20) comprising means for generating an interrupt to the electronic component (10), which are activated when they detect an error in the word read from memory, so that the progress of this erroneous word through the pipeline stages of the component (10) is interrupted before it is transmitted to the execution pipeline stage and thus is unable to modify the content of the internal registers of the component (10) since the pipeline stage for storing the result will not be reached.

2. Device according to Claim 1, in which the means of detection/correction (20) comprise means for verifying the word read from memory which are able to be activated in parallel with its progress through the pipeline stages of the electronic component.

3. Device according to Claim 1, in which the means of detection/correction (20) comprise means furnished with a connection to the address bus which make it possible, following an error detection, to rewrite a corrected word directly to memory.

4. Device according to Claim 1, further comprising data coding means placed in series with the memory ports, and structured as pipeline stages so as to have the same bit rate as the electronic component (10) when the latter writes to memory, in particular during the block transfers.

5. Device according to Claim 4 furnished with a connection to the address bus, and with means for forwarding the addresses, comprising an assembly of pipeline registers (44) connected in series, in which the transport of the captured addresses is carried out, the number of these pipeline registers being identical to the number of pipeline stages (41, 42, 43) of the coding means so that these addresses propagate in the device with the same timing as the words to be coded.

6. Device according to Claim 5, comprising a comparator (45) hard-wired to each pipeline register (44) of the means for forwarding the addresses, these comparators (45) allowing real-time comparison between all the addresses that are located inside the device at a given moment and the address of the word that the electronic component (10) wishes to read from memory at that moment.

7. Device according to Claim 6, comprising means (46) introducing memory wait cycles for waiting for the electronic component when one of the comparators detects the presence of the address of the word that the component wishes to read from memory, these means making it possible to allow the word time to propagate in the last pipeline stages of the device so that the latter can write this word and its associated code to memory before the component reads them.

8. Device according to Claim 6 comprising multiplexing means (47) making it possible when one of the comparators detects the presence of the address of the word that the component wishes to read from memory, to supply this word to the component regardless of the pipeline stage wherein it is located and to disable the means of detecting errors of the device with regard to this word since its associated code has not had time to be calculated completely.

9. Method for detecting and correcting memory errors in an electronic system comprising an electronic component (10) having K pipeline stages and a structured memory with or without cache memory for which the accesses to the data and to their associated codes are simultaneous, **characterized in that** each word consisting of a data item and of its unique detection/correction code read from memory by the electronic component is not verified prior to the capture of this word by the component, this verification of the presence of an error in this word being furnished with a significant number of "bus cycles" so as to be equivalent to K-2, which number increases with the increase in the number of pipeline stages of the electronic components (10), and when an error is detected in the word read from memory, the forwarding of the word through the pipeline stages of the electronic component is interrupted before this erroneous word can be actually used by a unit for processing this component (10) and is thus unable to modify the content of the internal registers of this component (10) since no result will be generated, the pipeline being purged after the interrupt only of the erroneous data item and of the subsequent ones that have entered the component before it is interrupted.

10. Method according to Claim 9, in which the verification of the word read from memory is performed in parallel with its progress through the pipeline stages of the electronic component, so as to ensure that it is not erroneous, thus making it possible to mask the operating time of the device by the propagation time in the first pipeline stages of the component.

11. Method according to Claim 9, in which, when an error is detected in a word read from memory, and after its correction, this corrected word is rewritten to memory directly without intervention of the electronic component.

12. Method according to Claim 9, in which the words that the electronic component has to write to memory are captured, then coded with any error detection/correction code, then written to memory; the coding being structured as pipeline stages so as to have the same bit rate as the component when the latter writes to memory and, thus, not slow it down, in particular during the block transfers.

13. Method according to Claim 12, which captures the addresses at the same time as the words to be coded, and in which these addresses propagate inside pipeline stages with the same timing as the words to be coded.

14. Method according to Claim 13, in which all the addresses present in the pipeline stages are compared in real time with the address of the word that the electronic component wishes to read, this being done so as to detect whether the word sought by the component has not been written very recently and is still not located in these pipeline stages.

15. Method according to Claim 14, in which if a word that the electronic component wishes to read from memory is still located in the pipeline stages, memory wait cycles are introduced for waiting for the electronic component so as to wait for the code calculation and the writing of this word and of its associated code to memory to be finalized before the component reads them.

16. Method according to Claim 8, in which if a word that the electronic component wishes to read from memory is still located in the pipeline stages, this word is supplied directly to the component, thus disabling error detection with regard to this word since its associated code has not had time to be calculated completely.

17. Use of the device according to any one of Claims 1 to 8 in an onboard electronic system.

18. Use of the device according to any one of Claims 1 to 8, in the field of space.
